# EUROPEAN PATENT APPLICATION

(11) **EP 4 620 656 A1**
(43) Date of publication of application: **24.09.2025**
(21) Application number: 24832199.4
(22) Date of filing: 19.04.2024
(51) Int. Cl.: B29C 65/14, B29C 65/00, B29C 65/78, C09D 5/33, B29D 99/00, H01M 50/105, H01M 50/183

(54) **APPARATUS AND METHOD FOR SEALING POUCH TYPE BATTERY CASE**

(30) Priority: 30.06.2023 KR 20230085018; 15.04.2024 KR 20240050041
(71) Applicant: LG Energy Solution, Ltd., Seoul 07335 (KR)
(72) Inventor: PARK, Kyoung Do, Daejeon 34122 (KR)
(74) Representative: Goddar, Heinz J.
(86) International application number: PCT/KR2024/005313
(87) International publication number: WO 2025/005414

(57) **Abstract**

Disclosed are an apparatus and method for sealing a pouch-shaped battery case, and more particularly an apparatus for sealing a pouch-shaped battery case that includes a first case and a second case in which an electrode assembly is received, the apparatus including a non-contact heating member configured to be located above or under a sealed portion at which the first case and the second case overlap each other, the non-contact heating member being configured to heat the sealed portion to a predetermined temperature such that the sealed portion can be thermally fused, and a method of sealing the pouch-shaped battery case.

## Description

### [Technical Field]

This application claims the benefit of priority to Korean Patent Application No. 2023-0085018 filed on June 30, 2023 and Korean Patent Application No. 2024-0050041 filed on April 15, 2024, the disclosure of which is incorporated herein by reference in its entirety.

The present invention relates to an apparatus and method for sealing a pouch-shaped battery case. More particularly, the present invention relates to an apparatus for sealing a pouch-shaped battery case including a support die and a non-contact heating member configured to heat a sealed portion of the pouch-shaped battery case and a method of sealing the pouch-shaped battery case.

### [Background Art]

As it becomes urgent to take measures against environmental pollution, there is an increasing interest in the industry to reduce greenhouse gas emissions. As an alternative to fossil fuels, therefore, a lot of research is being conducted on lithium secondary batteries, which are a type of eco-friendly energy.

Based on the type of an exterior material, lithium secondary batteries are categorized into a pouch-shaped secondary battery made of a laminated sheet, a cylindrical secondary battery made of a metal material, and a prismatic secondary battery made of a metal material. The pouch-shaped secondary battery has the advantages of easy deformation, easy manufacturing, and manufacturing cost reduction.

The pouch-shaped secondary battery has an electrode assembly, which includes a positive electrode, a negative electrode, and a separator disposed between the positive electrode and the negative electrode, received in a pouch-shaped battery case made of a laminated sheet. A positive electrode tab constituting the positive electrode and a negative electrode tab constituting the negative electrode are connected respectively to a positive electrode lead and a negative electrode lead, which extend so as to be exposed outside the pouch-shaped battery case.

Meanwhile, the pouch-shaped battery case includes a first case and a second case configured to receive the electrode assembly, wherein each of the first case and the second case has a laminate structure including an outer resin layer configured to protect the electrode assembly from the outside, a metal layer configured to block air and moisture, and an inner resin layer configured to be thermally fused for sealing.

The first case and the second case are disposed such that the inner resin layers face each other, the positive electrode lead and the negative electrode lead extend through outer peripheries of the first case and the second case, and the outer peripheries are thermally fused to form a sealed portion.

In order to increase the force of sealing between the positive electrode lead and the pouch-shaped battery case and between the negative electrode lead and the pouch-shaped battery case, lead films may be attached to an upper surface and a lower surface of each of the positive electrode lead and the negative electrode lead.

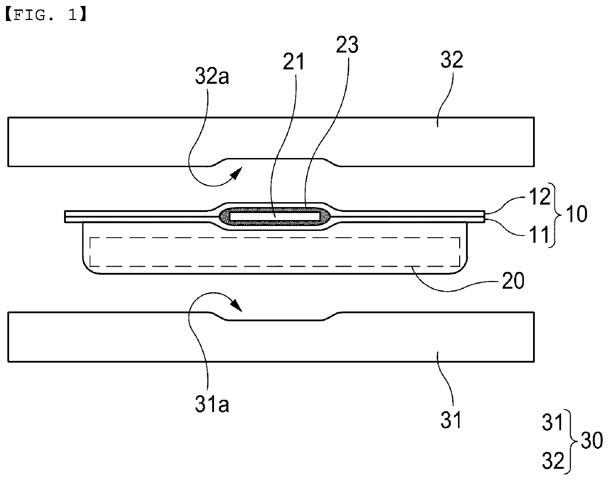

FIG. 1 is a front view illustrating a conventional process of sealing a pouch-shaped battery case.

Referring to FIG. 1, the pouch-shaped battery cell has an electrode assembly 20 received in a battery case 10, wherein the battery case 10 includes a first case 11 configured to receive the electrode assembly 20 and a second case 12 disposed at an upper surface of the first case 11 so as to be thermally fused to the first case 11.

In this case, each of the first case 11 and the second case 12 is made of a laminated sheet including an outer resin layer configured to protect the electrode assembly 20 from the outside, a metal layer configured to block air and moisture, and an inner resin layer configured to be thermally fused for sealing.

A positive electrode lead 21 coupled to a positive electrode tab of the electrode assembly 20 extends through an outer periphery of the battery case 10 so as to protrude outward in the state in which lead films 23 are attached to an upper surface and a lower surface of the positive electrode lead.

In order to form a sealed portion of the battery case 10, the outer periphery of the battery case 10 is disposed between a pair of sealing tools 30 including a first sealing tool 31 and a second sealing tool 32. Subsequently, when the outer periphery of the battery case 10 is pressed using the first sealing tool 31 and the second sealing tool 32 heated to a predetermined temperature, the inner resin layers of the first case 11 and the second case 12 are melted and thermally fused to each other to form a sealed portion.

At this time, in order to prevent a decrease in the sealing force of the outer periphery of the battery case 10 due to the difference in thickness between the positive electrode lead 21 and the lead film 23, a first depression portion 31a may be formed in the first sealing tool 31 and a second depression portion 32a may be formed in the second sealing tool 32 so as to correspond to the thicknesses of the positive electrode lead 21 and the lead film 23.

However, if the step of the first depression portion 31a and the step of the second depression portion 32a do not accurately match the thicknesses of the positive electrode lead 21 and the lead film 23, the first case 11 and the second case 12 may not be brought into tight contact with each other, whereby a gap may be formed therebetween, and an electrolyte may leak through the gap.

In addition, if foreign matter is adhered to the sealing tools 30, the battery case may be damaged by the foreign matter during a pressing process, and the sealing temperature deviation may occur at the parts of the pressing surfaces of the sealing tools 30 where the foreign matter is attached.

In order to prevent problems caused when using a contact sealing tool configured to directly press the battery case, as described above, Patent Document 1 discloses a process for forming a sealed portion by radiating infrared light to a part to be sealed, which is an outer peripheral surface of an electrode assembly receiving portion.

Patent Document 1 is capable of preventing sealing defects caused by differences in thickness between a step of the sealing tool and an electrode lead by heating the part to be sealed in a non-contact manner, but a region to be heated is not easily adjustable, whereby heat may be applied to regions other than the part to be sealed.

### (Prior Art Document)

(Patent Document 1) Korean Registered Patent Publication No. 10-1216423

### [Disclosure]

### [Technical Problem]

The present invention has been made in view of the above problems, and it is an object of the present invention to provide an apparatus and method for sealing a pouch-shaped battery case capable of sealing a sealed portion of the pouch-shaped battery case in a non-contact state by selectively heating the sealed portion.

It is another object of the present invention to provide an apparatus and method for sealing a pouch-shaped battery case capable of easily adjusting a heating position and a heating area so as to correspond to a change in the width of a sealed portion of the pouch-shaped battery case.

### [Technical Solution]

An apparatus for sealing a pouch-shaped battery case according to the present invention to accomplish the above objects is an apparatus for sealing a battery case (10) that includes a first case (11) and a second case (12) in which an electrode assembly (20) is received, the apparatus including a non-contact heating member (200) configured to be located above or under a sealed portion (S) at which the first case (11) and the second case (12) overlap each other, the non-contact heating member being configured to heat the sealed portion (S) to a predetermined temperature such that the sealed portion (S) can be thermally fused.

The non-contact heating member (200) may include a heater (210) having a predetermined length and a cover (220) configured to cover the heater (210), and the cover (220) may include a first cover (221) configured to cover a side surface of the heater (210) in a longitudinal direction, a side surface of the heater in a width direction, and a side surface of the heater facing in a direction opposite a direction in which the sealed portion (S) is disposed; and a second cover (222) extending downward from the side surface of the first cover (221) in the longitudinal direction by a predetermined length.

The non-contact heating member (200) may be located above and under the sealed portion (S).

The second cover (222) may be made of an inwardly or outwardly deformable material.

Each of the first cover (221) and the second cover (222) may be made of a material selected from the group consisting of a glassy insulating material, a mineral insulating material, a metallic insulating material, and a carbonaceous insulating material.

Each of the first cover (221) and the second cover (222) may include a heat reflective coating layer provided on an inner surface thereof.

The first cover (221) and the second cover (222) may be connected to each other via a turning member (223).

The turning member may be a hinge shaft.

The second cover (222) may be separated from the first cover (221) and may be movable in a width direction of the first cover (221).

The first cover (221) may be provided at an edge thereof in a longitudinal direction with a first flange (221a) extending in the width direction of the first cover (221).

The second cover (222) may be provided at an upper edge thereof in the longitudinal direction with a second flange (222a) extending in the width direction of the first cover (221).

The apparatus may further include a temperature sensor (300) configured to measure the temperature of the sealed portion (S), wherein the temperature sensor (300) may be located inside the cover (220), the temperature sensor being disposed so as to face the sealed portion (S).

A method of sealing a pouch-shaped battery case according to the present invention is a method of sealing a battery case (10) that includes a first case (11) and a second case (12) in which an electrode assembly (20) is received, the method including a first step of determining the position of a sealed portion (S) at which the first case (11) and the second case (12) overlap each other, a second step of adjusting the output of a non-contact heating member (200) such that heat can reach at least one of a first surface and a second surface of the sealed portion (S), and a third step of measuring the temperature of the sealed portion (S) to determine whether the temperature of the sealed portion has reached a set temperature.

The method may further include securing the set temperature of the third step before the first step.

The second step may include adjusting the output of the non-contact heating member (200) such that the heat can reach the first surface and the second surface of the sealed portion (S).

The second step may further include adjusting the area of the first surface or the second surface of the sealed portion that the heat reaches.

The temperature of the sealed portion measured in the third step may be the temperature of the first surface or the second surface of the sealed portion which heat of the heating member directly reaches.

In addition, the present invention may provide various combinations of the above solving means.

### [Advantageous Effects]

As is apparent from the above description, in an apparatus and method for sealing a pouch-shaped battery case according to the present invention, a sealed portion of the pouch-shaped battery case is heated in a non-contact state while heat is intensively transferred to a predetermined region, whereby it is possible to minimize product defects that may be caused by poor sealing of the sealed portion or sealing of parts other than the sealed portion.

Also, in the apparatus and method for sealing the pouch-shaped battery case according to the present invention, a cover constituting a heating member may be deformed, whereby it is possible to use various kinds of battery cases with different positions and areas of the sealed portion.

### [Description of Drawings]

FIG. 1 is a front view illustrating a conventional process of sealing a pouch-shaped battery case.
FIG. 2 is a perspective view of an apparatus for sealing a pouch-shaped battery case according to a first embodiment of the present invention.
FIG. 3 is an enlarged sectional view showing a part of FIG. 2.
FIG. 4 is a perspective view of an apparatus for sealing a pouch-shaped battery case according to a second embodiment of the present invention.
FIG. 5 is an enlarged sectional view showing a part of FIG. 4.
FIG. 6 is a perspective view (a) and a front view (b) of the pouch-shaped battery case sealing apparatus according to the second embodiment of the present invention.
FIG. 7 is a perspective view of an apparatus for sealing a pouch-shaped battery case according to a third embodiment of the present invention.
FIG. 8 is an enlarged sectional view showing a part of FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

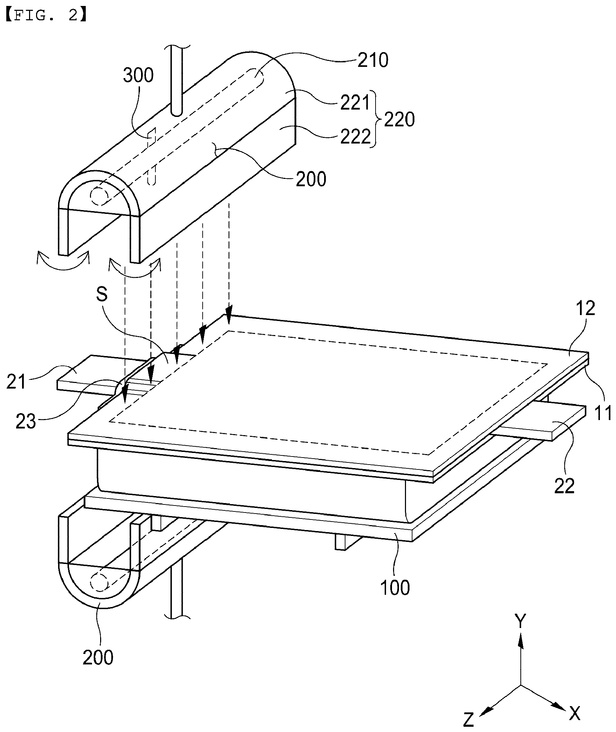

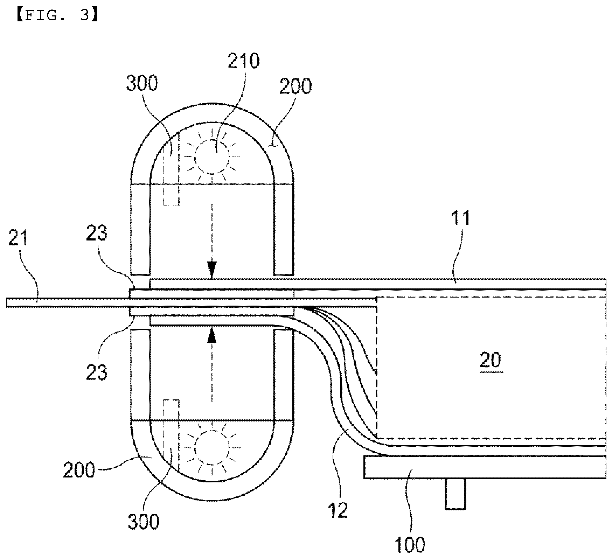

FIG. 2 is a perspective view of an apparatus for sealing a pouch-shaped battery case according to a first embodiment of the present invention, and FIG. 3 is an enlarged sectional view showing a part of FIG. 2.

Referring to FIGs. 2 and 3, the pouch-shaped battery case sealing apparatus according to the first embodiment includes a support die 100, a heating member 200, and a temperature sensor 300.

First, the support die 100 is configured to support a battery cell, and the battery cell has an electrode assembly 20 received in a battery case 10 including a first case 11 and a second case 12, wherein the electrode assembly 20 is a bidirectional electrode assembly having a positive electrode lead 21 and a negative electrode lead 22 protruding in opposite directions. Alternatively, the electrode assembly 20 may be a unidirectional electrode assembly having a positive electrode lead 21 and a negative electrode lead 22 protruding in the same direction.

The pouch-shaped battery case 10 is made of a laminate sheet including an outer resin layer configured to protect the battery cell from the outside, a metal layer configured to block air and moisture, and an inner resin layer configured to be thermally fused for sealing.

Here, it is required for the outer resin layer to have a high tensile strength to thickness ratio and weather resistance, and the outer resin layer may include at least one selected from the group consisting of, for example, oriented nylon, polyethylene terephthalate (PET), and polyethylene naphthalate (PEN). The metal layer may be made of a variety of metal materials that may function to prevent air, moisture, and the like from being introduced into the battery, preferably aluminum or an aluminum alloy. In addition, the inner resin layer is thermally fused by heat and pressure applied thereto in the state in which the electrode assembly is received to provide a seal, and preferably includes at least one selected from the group consisting of a polyolefin-based resin and cast polypropylene (CPP).

A lead film 23 is located on an upper surface, a lower surface, and a side surface of each of the positive electrode lead 21 and the negative electrode lead 22, and the positive electrode lead 21 and the negative electrode lead 22 each having the lead film 23 attached thereto are disposed between the first case 11 and the second case 12. A sealed portion S is formed at at least a part of the outer periphery at which the first case 11 and the second case 12 overlap each other, and the battery case 10 having the sealed portion S where the first case 11 and the second case 12 overlap each other is seated on the support die 100.

The heating member 200 is located above or under the sealed portion S to heat the sealed portion S to a predetermined temperature, whereby the inner resin layers of the first case 11 and the second case 12 are melted and thermally fused. Here, the heating member 200 is preferably a non-contact heating member 200 that is not in direct contact with the sealed portion S.

As shown in the figures, the heating member 200 may be located above and under the sealed portion S, but this is only an example, and the heating member 200 may be located above or under the sealed portion S to transfer heat to the top of the sealed portion S or the bottom of the sealed portion S in order to seal the sealed portion S.

More specifically, the heating member 200 includes a heater 210 having a predetermined length and a cover 220 configured to cover the heater 210.

Here, the heater 210 may be a bar-shaped infrared heater, by which the metal blocking layer is heated, and heat conducted therefrom melts the inner resin layer to form a thermally fused sealed portion. Of course, the heater is not limited to an infrared heater, and it is possible to use a halogen lamp.

The cover 220 may include a first cover 221 configured to cover a side surface of the heater 210 in a longitudinal direction (z), a side surface of the heater in a width direction (x), and a side surface of the heater facing in a direction opposite the direction in which the sealed portion S is disposed and a pair of second covers 222 extending downward (y) from the side surface of the first cover 221 in the longitudinal direction (z) by a predetermined length.

Here, the side surface of the first cover 221 facing in the direction opposite the direction in which the sealed portion S is disposed may be an upper surface if the heating member 200 is located above the sealed portion S or a lower surface if the heating member 200 is located under the sealed portion S.

The first cover 221 and the second cover 222 may prevent heat transferred from the heater 210 from being dispersed to unnecessary parts, and in particular, the second cover 222 may extend so as to be as close as possible to the sealed portion S to prevent heat from being discharged outside the space defined between the pair of second covers 222.

The second cover 222 extends from the first cover 221, and the first cover 221 and the second cover 222 may be made of the same material or different materials.

For example, each of the first cover 221 and the second cover 222 may be made of a material selected from the group consisting of a glassy insulating material, a mineral insulating material, a metallic insulating material, and a carbonaceous insulating material.

The glassy insulation material may include glass wool, which is primarily composed of a glass-based mineral such as silica, limestone, feldspar, or soda ash, and the mineral insulation material may include asbestos, rock wool, or perlite. In addition, the metallic insulation material may include silica, alumina, and magnesia, and the carbonaceous insulation material may be manufactured by molding carbon fiber, carbon powder, etc.

Meanwhile, the dimensions of the battery cell may be changed depending on the needs of customers, whereby the length of the sealed portion S in the width direction (x) may be changed.

In this case, the second cover 222 is preferably made of a material that can be deformed in an inward direction in which the pair of second covers 222 moves close to each other or in an outward direction in which the pair of second covers 222 moves away from each other so as to correspond to the length of the sealed portion S in the width direction (x).

Since the first cover 221 and the second cover 222 perform the function of collecting the heat generated by the heater 210 so as to be supplied to the sealed portion S, it is preferable for each of the first cover 221 and the second cover 222 to be further provided on an inner surface thereof with a heat reflective coating layer, and the heat reflective coating layer may be made of a material such as aluminum, silver, copper, or quartz; however, the material of the heat reflective coating layer is not particularly limited as long as the same function can be performed.

In addition, it is preferable for the heater 210 to radiate uniform heat to the entirety of the sealed portion S such that the entirety of the sealed portion S can be uniformly sealed, and the length of the heater 210 is preferably equal to or greater than the length of the sealed portion S.

The temperature sensor 300 is configured to measure the temperature of the sealed portion S.

Although it is possible to perform the sealing operation with the optimum power of the heater 210, the optimum distance between the heater 210 and the sealed portion S, and the optimum heating time by considering the heating condition of the heating member 200, e.g., the width of the sealed portion S, which may be changed depending on the standard of the battery cell, it is preferable to measure the temperature of the sealed portion S because the heater 210 may not work properly.

Specifically, the temperature sensor 300, which is configured to measure whether the temperature of the sealed portion S has reached the temperature required for heat fusion, is located inside the cover 220 of the heating member 200, and is disposed toward the sealed portion S to measure the temperature of the sealed portion S. For example, the temperature sensor 300 may be installed inside the first cover 221, and a temperature measurement portion (not shown) may be disposed so as to face the sealed portion S in order to measure the temperature of the sealed portion S. Here, the temperature sensor 300 may be a non-contact thermometer, such as a non-contact infrared thermometer.

Although a single temperature sensor 300 is shown in the figures, this is merely an example, and a plurality of temperature sensors may be provided to simultaneously measure the temperatures of opposite edges and the middle of the sealed portion S.

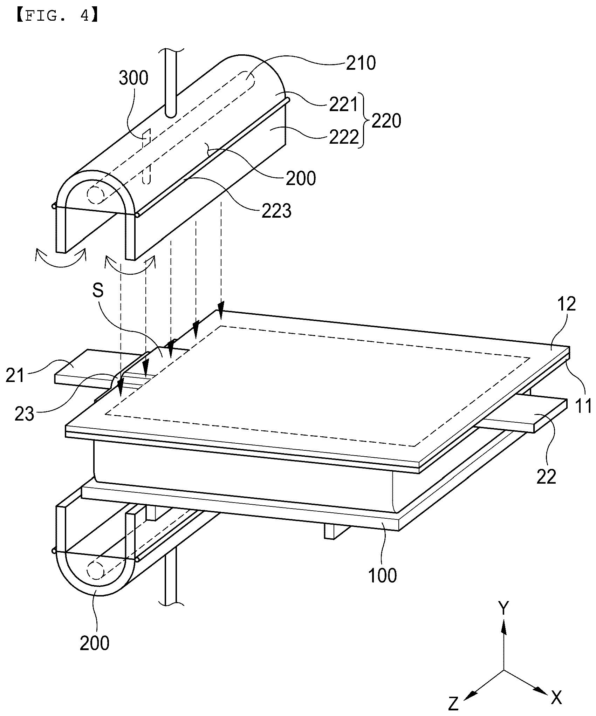

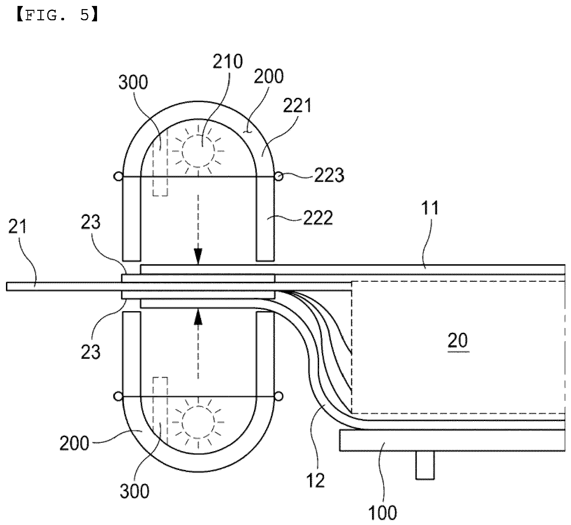

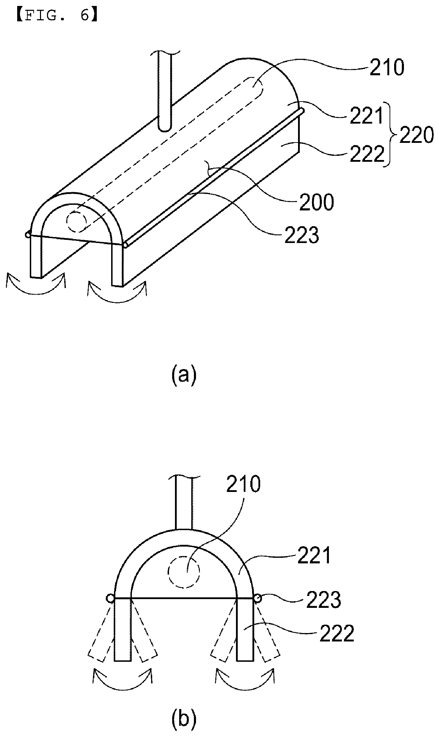

FIG. 4 is a perspective view of an apparatus for sealing a pouch-shaped battery case according to a second embodiment of the present invention, FIG. 5 is an enlarged sectional view showing a part of FIG. 4, and FIG. 6 is a perspective view (a) and a front view (b) of the pouch-shaped battery case sealing apparatus according to the second embodiment of the present invention.

Referring to FIGs. 4 to 6, the pouch-shaped battery case sealing apparatus according to the second embodiment is identical to the pouch-shaped battery case sealing apparatus according to the first embodiment, except that the first cover 221 and the second cover 222 are connected to each other via a turning member 223.

Therefore, only the configuration different from the pouch-shaped battery case sealing apparatus according to the first embodiment will hereinafter be described.

The first cover 221 and the second cover 222 are connected to each other by the turning member 223, whereby the pair of second covers 222 may be deformed so as to be inclined in an inward direction toward each other or to be inclined in an outward direction away from each other. Of course, it is obvious that, once the second cover 222 is deformed, it must remain deformed in the absence of external force.

Here, the turning member 223 may be a hinge shaft, but is not limited thereto as long as the first cover 221 and the second cover 222 can be turned relative to each other.

When the first cover 221 and the second cover 222 are connected to each other by the pivoting member 223, as described above, it is easier to adjust the supply direction and destination of heat generated by the heater 210. Furthermore, the distance between the heater 210 and the sealed portion S may be adjusted by replacing the second cover 222 with a second cover having a different height.

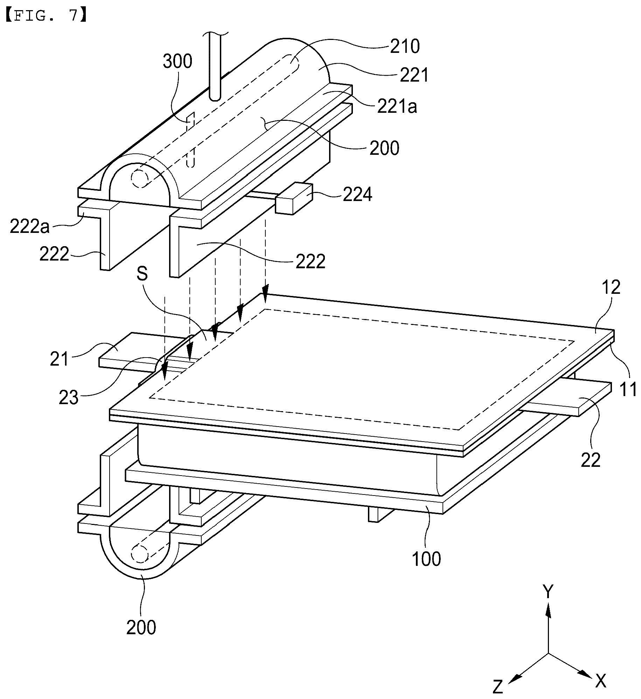

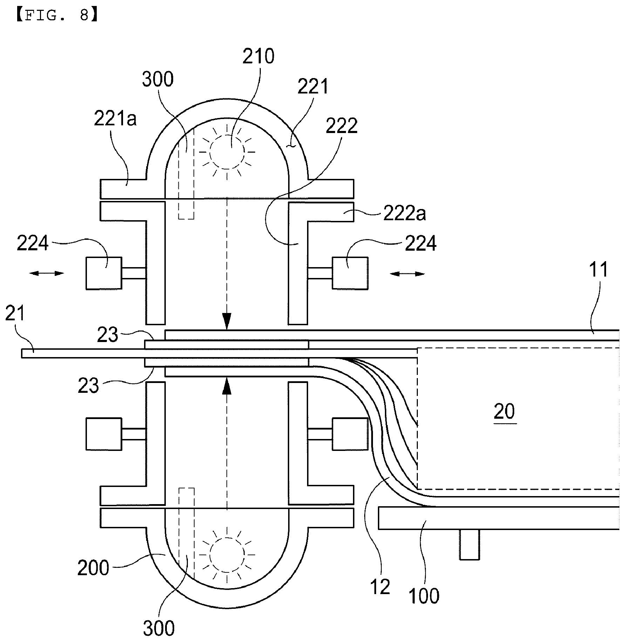

FIG. 7 is a perspective view of an apparatus for sealing a pouch-shaped battery case according to a third embodiment of the present invention, and FIG. 8 is an enlarged sectional view showing a part of FIG. 7.

Referring to FIGs. 7 and 8, the pouch-shaped battery case sealing apparatus according to the third embodiment is identical to the pouch-shaped battery case sealing apparatus according to the first embodiment, except for the configuration of the cover 220.

Therefore, only the configuration different from the pouch-shaped battery case sealing apparatus according to the first embodiment will hereinafter be described.

When the heating member 200 is located above the sealed portion S, the second cover 222 is located under the first cover 221, and in this case, the first cover 221 and the second cover 222 are preferably separated from each other such that the second cover 222 can be moved in a width direction of the first cover 221. When the heating member 200 is located under the sealed portion S, the second cover 222 is located above the first cover 221, and may be similarly configured.

Hereinafter, the case in which the heating member 200 is located above the sealed portion S will be described, and a description of the case in which the heating member 200 is located under the sealed portion S will be omitted.

Specifically, the second cover 222 is formed in the shape of an approximately quadrangular plate extending vertically downward from each of opposite edges of the first cover 221 in a longitudinal direction, and a transfer member 224 configured to move the second cover 222, such as a servomotor, is connected to a side surface of the second cover.

Consequently, the distance between the pair of second covers 222 may be increased or decreased by operation of the transfer member 224 according to a control signal.

In particular, when the first cover 221 is provided at one or both of the opposite edges thereof in the longitudinal direction with a first flange 221a extending in a width direction of the first cover 221, when the second cover 222 is provided at one or both of opposite upper edges thereof in the longitudinal direction with a second flange 222a extending in the width direction of the first cover 221, or when the first flange 221a and the second flange 222a are provided simultaneously, heat may be prevented from being discharged to the outside by the first flange 221a and the second flange 222a.

Here, the first cover 221 may be made of a material selected from the group consisting of the glassy insulating material, the mineral insulating material, the metallic insulating material, and the carbonaceous insulating material described above.

According to the third embodiment of the present invention having the configuration as described above, the position of the second cover 222 may be adjusted using the transfer member 224, whereby more precise positioning is possible, and therefore it is possible to heat only a predetermined region of the sealed portion.

The present invention provides a method of sealing a pouch-shaped battery case, which includes a first case 11 and a second case 12 in which an electrode assembly 20 is received, wherein the method may include a first step of determining the position of a sealed portion S at which the first case 11 and the second case 12 overlap each other, a second step of adjusting the output of a non-contact heating member 200 such that heat can reach at least one of a first surface and a second surface of the sealed portion S, and a third step of measuring whether the temperature of the sealed portion S has reached a set temperature.

Specifically, the first step is a step of disposing the first case 11 and the second case 12 such that outer peripheries of the first case 11 and the second case 12 face each other and determining the position and width of the sealed portion S to be formed at the first case 11 and the second case 12.

In the second step, the output of the non-contact heating member 200 may be adjusted such that heat can reach the first surface and/or the second surface of the sealed portion S.

Also, in the second step, it is preferable to perform a step of adjusting the area of the first surface and/or the second surface of the sealed portion S that heat reaches. For example, a pair of second covers 222 or a single second cover 222 constituting the heating member 200 may be deformed or turned to prevent heating of unnecessary parts.

In the third step, the temperature of the first surface and/or the second surface of the sealed portion which the heat of the heating member 200 directly reaches is measured.

That is, a temperature sensor 300 is disposed inside a cover 220 of the heating member 200 disposed above and/or under the sealed portion S, and the temperature of the sealed portion S measured in the third step is the temperature of the first surface and/or the second surface of the sealed portion which heat of the heating member 200 at which the temperature sensor 300 is disposed reaches.

Meanwhile, it is preferable to secure the heat fusion conditions of the sealed portion S, such as the output of a heater 210 constituting the heating member 200, the heating time, and the temperature of the first surface and/or the second surface of the sealed portion S, before the first step.

Those skilled in the art to which the present invention pertains will appreciate that various applications and modifications are possible within the category of the present invention based on the above description.

### (Description of Reference Symbols)

10: Battery case
11: First case 12: Second case
20: Electrode assembly
21: Positive electrode lead 22: Negative electrode lead
23: Lead film
30: Sealing tool
31: First sealing tool 31a: First depression portion
32: Second sealing tool 32a: Second depression portion
100: Support die
110: Through-hole
200: Heating member
210: Heater
220: Cover
221: First cover 221a: First flange
222: Second cover 222a: Second flange
223: Turning member 224: Transfer member
300: Temperature sensor
S: Sealed portion

## Claims

1. An apparatus for sealing a pouch-shaped battery case that comprises a first case and a second case in which an electrode assembly is received, the apparatus comprising:
a non-contact heating member configured to be located above or under a sealed portion at which the first case and the second case overlap each other, the non-contact heating member being configured to heat the sealed portion to a predetermined temperature such that the sealed portion can be thermally fused.

2. The apparatus according to claim 1, wherein
the non-contact heating member comprises a heater having a predetermined length, and a cover configured to cover the heater; and
the cover comprises:
a first cover configured to cover a side surface of the heater in a longitudinal direction, a side surface of the heater in a width direction, and a side surface of the heater facing in a direction opposite a direction in which the sealed portion is disposed; and
a second cover extending downward from the side surface of the first cover in the longitudinal direction by a predetermined length.

3. The apparatus according to claim 2, wherein the non-contact heating member is located above and under the sealed portion.

4. The apparatus according to claim 2, wherein the second cover is made of an inwardly or outwardly deformable material.

5. The apparatus according to claim 2, wherein each of the first cover and the second cover is made of a material selected from a group consisting of a glassy insulating material, a mineral insulating material, a metallic insulating material, and a carbonaceous insulating material.

6. The apparatus according to claim 5, wherein each of the first cover and the second cover includes a heat reflective coating layer provided on an inner surface thereof.

7. The apparatus according to claim 2, wherein the first cover and the second cover are connected to each other via a turning member.

8. The apparatus according to claim 7, wherein the turning member is a hinge shaft.

9. The apparatus according to claim 2, wherein the second cover is separated from the first cover and is movable in a width direction of the first cover.

10. The apparatus according to claim 9, wherein the first cover is provided at an edge thereof in a longitudinal direction with a first flange extending in the width direction of the first cover.

11. The apparatus according to claim 9, wherein the second cover is provided at an upper edge thereof in a longitudinal direction with a second flange extending in the width direction of the first cover.

12. The apparatus according to claim 2, further comprising:
a temperature sensor configured to measure a temperature of the sealed portion, wherein
the temperature sensor is located inside the cover, the temperature sensor being disposed so as to face the sealed portion.

13. A method of sealing a pouch-shaped battery case that comprises a first case and a second case in which an electrode assembly is received, the method comprising:
a first step of determining a position of a sealed portion at which the first case and the second case overlap each other,
a second step of adjusting an output of a non-contact heating member such that heat can reach at least one of a first surface and a second surface of the sealed portion; and
a third step of measuring a temperature of the sealed portion to determine whether the temperature of the sealed portion has reached a set temperature.

14. The method according to claim 13, further comprising securing the set temperature of the third step before the first step.

15. The method according to claim 14, wherein the second step comprises adjusting the output of the non-contact heating member such that the heat can reach the first surface and the second surface of the sealed portion.

16. The method according to claim 14, wherein the second step further comprises adjusting an area of the first surface or the second surface of the sealed portion that the heat reaches.

17. The method according to claim 16, wherein the temperature of the sealed portion measured in the third step is a temperature of the first surface or the second surface of the sealed portion that the heat of the heating member directly reaches.
